# EUROPÄISCHE PATENTSCHRIFT

(11) **EP 1 343 591 B1**
(45) Veröffentlichungstag und Bekanntmachung des Hinweises auf die Patenterteilung: **12.09.2007**
(21) Anmeldenummer: 01271258.4
(22) Anmeldetag: 13.12.2001
(51) Int. Cl.: B05B 1/04, B05B 1/34

(54) **DÜSENEINRICHTUNG**
NOZZLE DEVICE
GICLEUR

(30) Priorität: 20.12.2000 DE 10063529
(43) Veröffentlichungstag der Anmeldung: 17.09.2003
(73) Patentinhaber: Valeo Systèmes d'Essuyage, 78321 Le Mesnil Saint Denis (FR)
(72) Erfinder: STERNBACH, Arndt, 74321 Bietigheim-Bissingen (DE); BENNER, Mark, M., 63170 Perignat Les Sarlieve (FR)
(74) Vertreter: Jahn, Wolf-Diethart
(86) Internationale Anmeldenummer: PCT/EP2001/014637
(87) Internationale Veröffentlichungsnummer: WO 2002/049769

(56) Entgegenhaltungen:
- DE-A- 1 655 048
- DE-A- 4 422 590
- GB-A- 2 122 920

## Beschreibung

Die Erfindung bezieht sich auf eine Düseneinrichtung zur Verteilung oder Abgabe von Flüssigkeit und dabei speziell auf eine Düseneinrichtung zur Verteilung von Waschflüssigkeit auf Fahrzeugscheiben oder Streuscheiben von Fahrzeugscheinwerfern, gemäß Oberbegriff Patentanspruch 1.

Fahrzeugscheiben im Sinne der Erfindung sind vorzugsweise, aber nicht ausschließlich Fahrzeugfront- oder Heckscheiben.

Düseneinrichtungen zum Ausbringen und Verteilen von Waschflüssigkeit, d.h. insbesondere von Wasser, in der Regel auch mit Wasch- und/oder Gefrierschutz-Zusätzen, sind in zahlreichen Ausführungen bekannt. Insbesondere sind auch Düseneinrichtungen bekannt, deren Düsen oder Düsenöffnungen von Düsenschlitzen gebildet sind, und zwar zur Erzeugung eines fächerförmigen Flüssigkeitsstrahles (z.B. DE 299 00 948 U1). Angestrebt wird mit einem solchen Fächerstrahl eine möglichst breite Verteilung der Wasch- oder Reinigungsflüssigkeit auf der Fahrzeugscheibe, und zwar zur Erhöhung der Reinigungswirkung.

Aus der DE-A-16 55 048 ist weiterhin eine Spritzvorrichtung für Scheibenwaschanlagen mit einem als Drallzerstäuber ausgebildeten Sprüher bekannt. Der Sprüher weist eine Rotationskammer für die Flüssigkeit mit einer die Rotationsachse umschließenden hohlzylindrischen Wand auf, die in axialer Richtung jeweils durch eine Decke bzw. einen Boden abgeschlossen ist. Der Flüssigkeitsanschluß mündet an der Innenfläche der hohlzylindrischen Wand tangential in die Rotationskammer. Die als Breitschlitzdüse ausgebildete Flüssigkeitsaustrittsöffnung ist dagegen mittig in dem Boden bzw. der Decke der Rotationskammer vorgesehen.

Bei den bekannten Düseneinrichtungen ist der jeweilige Düsenschlitz so angeordnet, daß der Fächerstrahl mit seinem größeren Querschnitt horizontal oder in etwa horizontal auf die Fahrzeugscheibe auftrifft.

Der Erfindung liegt die Aufgabe zugrunde, eine Düseneinrichtung für eine verbesserte Reinigungswirkung aufzuzeigen. Zur Lösung dieser Aufgabe ist eine Düsenanordnung entsprechend dem Patentanspruch 1 ausgebildet.

Bei der erfindungsgemäßen Düsenanordnung wird die Reinigungsflüssigkeit innerhalb nach dem Eintreten in die Rotationskammer in Rotation versetzt und dadurch eine Homogenisierung des aus dem Düsenschlitz austretenden fächerförmigen Flüssigkeitsstrahles in der Weise erreicht, daß dieser eine im wesentlichen konstante Strahldichte in der Längserstreckung des Düsenschlitzes aufweist.

Weiterbildungen der Erfindung sind Gegenstand der Unteransprüche. Die Erfindung wird im Folgenden anhand der Figuren an einem Ausführungsbeispiel näher erläutert. Es zeigen:
- Fig. 1: in Seitenansicht eine Düseneinrichtung gemäß der Erfindung, insbesondere zur Verwendung als Waschdüse für Fahrzeugscheiben (z.B. Fahrzeugfront- oder Rückscheiben) oder für Streuscheiben von Fahrzeugscheinwerfern;
- Fig. 2: einen Schnitt entsprechend der Linie I - I der Figur 1.

Zum besseren Verständnis und zur Vereinfachung sind in den Figuren mit X, Y und Z die drei senkrecht zueinander verlaufenden Raumachsen angegeben.

Die in den Figuren allgemein mit 1 bezeichnete Düseneinrichtung ist bei der dargestellten Ausführungsform als Formteil, z.B. als Spritzgießteil aus einem geeigneten Material, z.B. Kunststoff gefertigt. Die Düseneinrichtung 1 umfaßt einen Düsenkörper 2, der im Inneren eine Kammer 3 bildet. Die Kammer 3 besitzt eine kreiszylinderförmige Innenfläche 4, die konzentrisch zu einer Mittel- oder Rotationsachse M parallel zur Y-Achse verläuft.

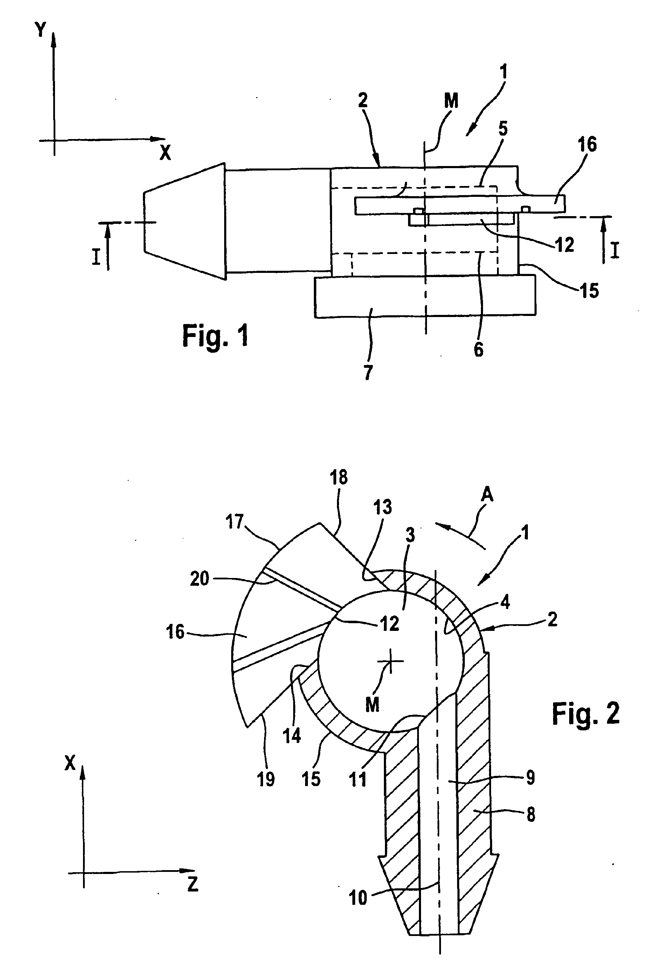

Die Kammer 3 ist an ihren in Richtung der Y-Achse voneinander beabstandeten Seiten jeweils durch einen ebenen Boden verschlossen, der in der Figur 1 mit der unterbrochenen Linie 5 bzw. 6 angedeutet ist, wobei die Ebene dieser Böden bei der dargestellten Ausführungsform senkrecht zur Y-Achse liegen.

Der in der Figur 1 untere Boden 6 ist von der inneren Stirnfläche eines Abschlußstücks 7 gebildet, welches in den Düsenkörpern 2 bzw. in die offene Seite einer die Kammer 3 bildenden Ausnehmung eingesetzt und am Düsenkörper 2 in geeigneter Weise befestigt ist.

An den Düsenkörper 2 ist ein hülsenartiges Anschlußstück 8 angeformt, mit welchem die Düseneinrichtung 1 an eine nicht dargestellte Zuführung, beispielsweise an einem Schlauch zum Zuführen einer Flüssigkeit, z.B. Waschflüssigkeit (beispielsweise Wasser mit Wasch- und/oder Gefrierschutzzusätzen) anschließbar ist. Im Anschlußstück 8 ist ein Kanal 9 ausgebildet, dessen Achse parallel zur X-Achse und damit auch parallel zur X-Z-Ebene liegt und der bezogen auf die Umfangs- oder Innenfläche 4 der Kammer 3 tangential in diese Kammer 3 mündet.

Bei der dargestellten Ausführungsform ist die Ausbildung weiterhin so getroffen, daß der Abstand der beiden Bodenflächen 5 und 6 gleich oder in etwa gleich dem Durchmesser des Kanals 9 ist und die Achse 10 des Kanals 9 von der Mittelachse M einen Abstand besitzt, der gleich dem halben Durchmesser der Kammer 3 abzüglich dem halben Durchmesser des Kanals 9 ist, so daß der Kanal 9 mit seiner in der Schnittdarstellung der 2 rechten Begrenzung tangential oder in etwa tangential zur Umfangsfläche 4 liegt. Der Kanal 9, der bei der Darstellung der Figuren 1 und 2 mit seiner Achse 10 parallel zur X-Achse liegt, besitzt über seine gesamte Länge einen konstanten Querschnitt.

Wie insbesondere die Figur 2 zeigt, ist der Durchmesser der Kammer 3 wesentlich größer als der Durchmesser des Kanals 9 und damit auch der Mündung dieses Kanals in die Kammer 3.

Gegenüber der Mündung 11 um die Mittelachse M in einer Umfangsrichtung A versetzt, ist im Düsenkörper 2 ein durchgehender, d.h. von der Außenseite des Düsenkörpers 2 bis in die Kammer 3 reichender Düsenschlitz 12 vorgesehen, der sich über einen größeren Winkelbereich um die Achse M erstreckt, und zwar bei der dargestellten Ausführungsform etwa über einen Winkelbereich 90° und der mit seiner Längserstreckung parallel zur X-Z-Ebene liegt. Jeweils bezogen auf ihre Mitte sind bei der dargestellten Ausführungsform die Mündung 11 und der Düsenschlitz 12 über einen Winkelbereich um die Achse M gegeneinander versetzt, der größer ist als die Winkellänge des Düsenschlitzes 12 und bei der dargestellten Ausführungsform etwa 180° beträgt.

Bei der dargestellten Ausführungsform ist der Düsenschlitz 12 an seinen Längsseiten von Flächen, die parallel zur X-Z-Ebene liegen, und an den beiden Enden von Flächen 13 und 14 begrenzt, die jeweils in einer Ebene liegen, welche mit einer gedachten, radial durch die Mittelachse M verlaufenden Ebene einen Winkel einschließt, und zwar derart, daß in der angenommenen Umfangsrichtung A der Übergang jeder Fläche 13 und 14 zu der inneren Umfangsfläche 4 einen kleineren Winkelabstand von der Mündung 11 aufweist als der äußere Übergang jeder Fläche 13 und 14 zu der Außenfläche 15 des Düsenkörpers 2.

Im Bereich des Düsenschlitzes 12 ist an den Düsenkörper 2 ein platten- oder teilringartiger Vorsprung 16 angeformt, der mit seinen Oberflächenseiten parallel zu der X-Z-Ebene liegt und mit einer Oberflächenseite bündig mit einer Längsseite des Düsenschlitzes 12, und zwar bei der dargestellten Ausführungsform bündig mit der dem Abschlußstück 7 abgewandten Längsseite des Düsenschlitzes 12. Der über die Außenfläche 15 vorstehende Vorsprung 14 erstreckt sich über die gesamte Winkellänge des Düsenschlitzes 12, wobei der außenliegende Rand 17 des Vorsprunges 16 einen Kreisbogen um die Mittelachse M beschreibt und die nach innen verlaufenden Ränder 18 und 19 jeweils in einer gemeinsamen Ebene mit der Begrenzungsfläche 13 (Rand 18) bzw. mit der Begrenzungsfläche 14 (Rand 19) liegen. Die Breite des Düsenschlitzes 12 ist bei der dargestellten Ausführungsform kleiner als der Abstand der Bodenflächen 5 und 6. Bei der dargestellten Ausführungsform ist der Düsenkörper 2 an seiner Außenfläche 15 ebenfalls im wesentlichen kreiszylinderförmig ausgeführt.

An seiner dem Düsenschlitz 12 zugewandten Oberflächenseite ist der Vorsprung 16 profiliert, d.h. bei der dargestellten Ausführungsform mit nutenartigen Vertiefungen 20 versehen, die sich vom Düsenschlitz 12 nach außen in Richtung des äußeren Randes 17 erstrecken. Diese Profilierung dient zur Modifizierung des aus dem Düsenschlitz austretenden, fächerförmigen Flüssigkeitsstrahls. Auch andere Profilierungen zur Strahlmodifikation sind denkbar.

Im Verwendungsfall wird die Düseneinrichtung 1 über das Anschlußstück 8 mit einer unter Druck stehenden Flüssigkeit, beispielsweise einer Waschflüssigkeit versorgt, die dann über den Kanal 9 in die Kammer 3 eintritt und schließlich als fächerförmiger Strahl aus dem Düsenschlitz 12 radial zur Mittelachse M austritt. Durch die tangentiale Einmündung des Kanals 9 in die an ihrer Innenfläche kreiszylinderförmig ausgebildeten Kammer wird im Inneren der Kammer ein Flüssigkeitsstrom oder Wirbel erzeugt, der um die Mittelachse M in Umfangsrichtung A rotiert. Durch den Druck der zugeführten Flüssigkeit sowie insbesondere auch durch die auf die Flüssigkeitspartikel durch die Wirbelbildung ausgeübten Fliehkräfte wird eine Homogenisierung des aus dem Düsenschlitz 12 austretenden fächerförmigen Flüssigkeitsstrahles in der Weise erreicht, daß eine im wesentliche konstante Strahldichte auch in der X-Z-Ebene, d.h. in der Ebene der Längserstreckung des Düsenschlitzes 12 erreicht ist. Durch den Wandabschnitt oder Vorsprung 16 sowie durch die dortige Profilierung 20 kann dann der fächerförmige Flüssigkeitsstrahl beispielsweise auch hinsichtlich seiner Strahldichte noch modifiziert werden, und zwar durch entsprechendes Umlenken, Streuen usw. der auf diesen Vorsprung 16 auftreffenden Flüssigkeitspartikel.

Die Erfindung wurde voranstehend an einem Ausführungsbeispiel beschrieben. Es versteht sich, daß Änderungen und Abwandlungen möglich sind, ohne daß dadurch der der Erfindung zugrundeliegende Gedanke verlassen wird. So ist es beispielsweise möglich, anstelle eines Düsenschlitzes 12 mehrere in Richtung des Pfeiles A aufeinanderfolgende Düsenöffnungen vorzusehen, die dann eine Anordnung von Düsenöffnungen bilden, die (Anordnung) in ihrer Wirkung dem Düsenschlitz 12 entsprechen. Weiterhin ist es auch möglich, in Umfangsrichtung A aufeinanderfolgend oder aber in Richtung der Y-Achse versetzt mehrere Düsenschlitze 12 oder Anordnungen von Düsenöffnungen vorzusehen.

Vorstehend wurde davon ausgegangen, daß die Umfangsfläche 4 der Kammer 3 kreiszylinderförmig konkav gekrümmt ausgeführt ist. Auch andere konkave Formgebungen für die innere Umfangsfläche der Kammer 3 ist denkbar, und zwar insbesondere auch im Bereich zwischen der Mündung 11 und dem wenigstens einen Düsenschlitz 12 oder einer entsprechenden Anordnung von Düsenöffnungen.

Weiterhin ist es auch möglich, in wenigstens einem Düsenschlitz 12 oder eine entsprechende Anordnung von mehreren Düsenöffnungen bezogen auf die Mittelachse M schraubenlinienartig anzuordnen oder auszubilden oder aber in einer Ebene anzuordnen, die gegenüber der X-Z-Ebene geneigt ist.

### Bezugszeichenliste

- 1: Düseneinrichtung
- 2: Düsenkörper
- 3: Kammer
- 4: innere Umfangswand
- 5, 6: Bodenfläche
- 7: Abschlußstück
- 8: Anschlußstück
- 9: Kanal
- 10: Kanalachse
- 11: Kanalmündung
- 12: Düsenschlitz
- 13, 14: Begrenzungsflächen
- 15: Düsenkörperaußenfläche
- 16: Wandabschnitt oder Vorsprung
- 17, 18, 19: Rand
- 20: Profilierung
- A: Richtung
- X-Achse:
- Y-Achse:
- Z-Achse:

## Patentansprüche

1. Düseneinrichtung zum Ausbringen einer Flüssigkeit, insbesondere einer Reinigungsflüssigkeit auf Fahrzeugscheiben und/oder Streuscheiben von Fahrzeugscheinwerfern, mit wenigstens einem an einem Düsenkörper (2) vorgesehenen Anschluß (8) zum Zuführen der Flüssigkeit sowie mit wenigstens einer Düsenöffnung (12) am Düsenkörper (2), die eine Schlitzdüsencharakteristik besitzt und über einen im Inneren des Düsenkörpers (2) ausgebildeten Flüssigkeitsweg mit dem Flüssigkeitsanschluß (8) verbunden ist, wobei im Inneren des Düsenkörpers (2) wenigstens eine Rotationskammer (3) für die Flüssigkeit mit einer eine Rotationsachse (M) umschließenden Innenfläche (4) gebildet ist, wobei die Rotationskammer (3) zumindest in einem Teilbereich der die Rotationskammer begrenzenden Innenfläche (4) um wenigstens eine Rotationsachse (M) konkav gekrümmt ausgebildet ist, und der Flüssigkeitsanschluß (8) mit seiner Mündung (11) bezogen auf die Rotationsachse (M) exzentrisch in die Kammer mündet, **dadurch gekennzeichnet, daß** die Mündung (11) des Flüssigkeitsanschlusses (8) und die wenigstens eine Düsenöffnung (12) an der die Rotationsachse (M) umschließenden Innenfläche (4) der Rotationskammer (3) vorgesehen sind, und daß die wenigstens eine Düsenöffnung (12) um einen Winkelbetrag um die Rotationsachse (M) gegenüber der Mündung des Flüssigkeitsanschlusses (8) versetzt ist.

2. Düseneinrichtung nach Anspruch 1, **dadurch gekennzeichnet, daß** die Rotationskammer (3) zumindest in einem zwischen der Mündung (11) des Flüssigkeitsanschlusses (8) und der wenigstens einen Düsenöffnung (12) liegenden Teilbereich ihrer Innenfläche (4) konkav ausgebildet ist.

3. Düseneinrichtung nach Anspruch 1, **dadurch gekennzeichnet, daß** die Rotationskammer an ihrer gesamten, die Rotationsachse (M) umschließenden Innenfläche (4) konkav ausgebildet ist.

4. Düseneinrichtung nach einem der vorhergehenden Ansprüche, **dadurch gekennzeichnet, daß** die Rotationskammer (3) zumindest an dem konkaven Teilbereich ihrer Innenfläche (4) entsprechend der Mantelfläche eines achsgleich mit der Rotationsachse (M) angeordneten Rotationskörpers ausgebildet ist.

5. Düseneinrichtung nach einem der vorhergehenden Ansprüche, **dadurch gekennzeichnet, daß** die Rotationskammer (3) zumindest an dem konkaven Teilbereich ihrer Innenfläche (4) kreiszylinderförmig ausgebildet ist.

6. Düseneinrichtung nach einem der vorhergehenden Ansprüche, **dadurch gekennzeichnet, daß** der Flüssigkeitsanschluß (8) einen Kanal (9) zum Zuführen der Flüssigkeit bildet, der mit seiner Achse (10) an der Mündung (11) exzentrisch in die Rotationskammer (3) mündet.

7. Düseneinrichtung nach einem der vorhergehenden Ansprüche, **dadurch gekennzeichnet, daß** der Flüssigkeitsanschluß (8) einen Kanal (9) zum Zuführen der Flüssigkeit bildet, und daß der Kanal (9) in etwa tangential bezogen auf eine gedachte Kreislinie um die Rotationsachse (M) in die Rotationskammer (3) mündet.

8. Düseneinrichtung nach einem der vorhergehenden Ansprüche, **dadurch gekennzeichnet, daß** der Flüssigkeitsanschluß (8) einen Kanal (9) zum Zuführen der Flüssigkeit bildet, und daß die Achse (10) des Kanals (9) des Flüssigkeitsanschlusses (8) oder der Mündung (11) in einer Ebene senkrecht oder in etwa senkrecht zur Rotationsachse (M) liegt.

9. Düseneinrichtung nach einem der vorhergehenden Ansprüche, **dadurch gekennzeichnet, daß** die Mündung (11) des Flüssigkeitsanschlusses (8) und die wenigstens eine Düsenöffnung (12) um einen Winkelbetrag größer oder kleiner als 90° gegeneinander versetzt vorgesehen sind.

10. Düseneinrichtung nach einem der vorhergehenden Ansprüche, **dadurch gekennzeichnet, daß** die Düsenöffnung von wenigstens einem Düsenschlitz (12) und/oder von wenigstens einer Anordnung aus mehreren Düsenöffnungen gebildet ist.

11. Düseneinrichtung nach Anspruch 10, **dadurch gekennzeichnet, daß** sich der wenigstens eine Düsenschlitz (12) und/oder die wenigstens eine Anordnung von Düsenöffnungen über einen Winkelbereich um die Rotationsachse (M) erstrecken.

12. Düseneinrichtung nach Anspruch 10 oder 11, **dadurch gekennzeichnet, daß** der wenigstens eine Düsenschlitz (12) und/oder die wenigstens eine Anordnung von Düsenöffnungen in einer Ebene vorgesehen sind, die senkrecht zur Rotationsachse (M) liegt oder mit dieser einen Winkel einschließt.

13. Düseneinrichtung nach einem der Ansprüche 10 bis 12, **dadurch gekennzeichnet, daß** sich der wenigstens eine Düsenschlitz (12) und/oder die wenigstens eine Anordnung von Düsenöffnungen entlang einer gedachten Schraubenlinie um die Rotationsachse (M) erstrecken.

14. Düseneinrichtung nach einem der vorhergehenden Ansprüche, **dadurch gekennzeichnet, daß** an der Außenfläche (15) des Düsenkörpers (2) im Bereich der wenigstens einer Düse (12) Mittel zum Modifizieren des austretenden Flüssigkeitsstrahles vorgesehen sind.

15. Düseneinrichtung nach Anspruch 14, **dadurch gekennzeichnet, daß** die Mittel zum Modifizieren des Flüssigkeitsstrahles von einer sich vom Düsenkörper (2) wegerstreckenden und der wenigstens einen Düsenöffnung (12) benachbarten Fläche gebildet sind, die beispielsweise Bestandteil eines Vorsprungs (16) und/oder profiliert ist.

16. Düseneinrichtung nach einem der vorhergehenden Ansprüche, **gekennzeichnet durch** ihre Herstellung als Formteil als Metall oder Kunststoff.

17. Düseneinrichtung nach einem der vorhergehenden Ansprüche, **dadurch gekennzeichnet, daß** die Achse des Flüssigkeitsanschlusses (8) und die Achse der wenigstens einen Düsenöffnung mit Fächercharakteristik in einer gemeinsamen oder annähernd einer gemeinsamen Ebene liegen.

## Claims

1. Nozzle device for applying a fluid, in particular a cleaning fluid, to vehicle windows and/or lenses of vehicle headlights, comprising at least one connection (8) provided on a nozzle body (2) for supplying the fluid and also comprising at least one nozzle opening (12) on the nozzle body (2) which has a slit nozzle characteristic and is connected to the fluid connection (8) via a fluid path formed in the interior of the nozzle body (2), wherein at least one rotation chamber (3) for the fluid is formed in the interior of the nozzle body (2) and has an inner surface (4) enclosing an axis of rotation (M), wherein the rotation chamber (3) is concavely curved around at least one axis of rotation (M) at least in a partial area of the inner surface (4) delimiting the rotation chamber, and the fluid connection (8) opens with its mouth (11) into the chamber eccentrically with respect to the axis of rotation (M), **characterised in that** the mouth (11) of the fluid connection (8) and the at least one nozzle opening (12) are provided on the inner surface (4) of the rotation chamber (3) which encloses the axis of rotation (M), and **in that** the at least one nozzle opening (12) is offset at an angle around the axis of rotation (M) with respect to the mouth of the fluid connection (8).

2. Nozzle device according to claim 1, **characterised in that** the rotation chamber (3) is concave at least in a partial area of its inner surface (4) located between the mouth (11) of the fluid connection (8) and the at least one nozzle opening (12).

3. Nozzle device according to claim 1, **characterised in that** the rotation chamber is concave over its entire inner surface (4) enclosing the axis of rotation (M).

4. Nozzle device according to one of the preceding claims, **characterised in that** the rotation chamber (3), at least over the concave partial area of its inner surface (4), is designed in a manner corresponding to the outer surface of a rotary body arranged coaxially with the axis of rotation (M).

5. Nozzle device according to one of the preceding claims, **characterised in that** the rotation chamber (3) is circular-cylindrical at least over the concave partial area of its inner surface (4).

6. Nozzle device according to one of the preceding claims, **characterised in that** the fluid connection (8) forms a channel (9) for supplying the fluid, which channel opens with its axis (10) eccentrically into the rotation chamber (3) at the mouth (11).

7. Nozzle device according to one of the preceding claims, **characterised in that** the fluid connection (8) forms a channel (9) for supplying the fluid, and **in that** the channel opens into the rotation chamber (3) approximately tangentially with respect to an imaginary circle around the axis of rotation (M).

8. Nozzle device according to one of the preceding claims, **characterised in that** the fluid connection (8) forms a channel (9) for supplying the fluid, and **in that** the axis (10) of the channel (9) of the fluid connection (8) or of the mouth (11) lies in a plane perpendicular or approximately perpendicular to the axis of rotation (M).

9. Nozzle device according to one of the preceding claims, **characterised in that** the mouth (11) of the fluid connection (8) and the at least one nozzle opening (12) are offset with respect to one another by an angle greater than or less than 90°.

10. Nozzle device according to one of the preceding claims, **characterised in that** the nozzle opening is formed by at least one nozzle slit (12) and/or by at least one arrangement of a plurality of nozzle openings.

11. Nozzle device according to claim 10, **characterised in that** the at least one nozzle slit (12) and/or the at least one arrangement of nozzle openings extend over an angular range around the axis of rotation (M) .

12. Nozzle device according to claim 10 or 11, **characterised in that** the at least one nozzle slit (12) and/or the at least one arrangement of nozzle openings are provided in a plane which is perpendicular to the axis of rotation (M) or encloses an angle with the latter.

13. Nozzle device according to one of claims 10 to 12, **characterised in that** the at least one nozzle slit (12) and/or the at least one arrangement of nozzle openings extend along an imaginary helix around the axis of rotation (M).

14. Nozzle device according to one of the preceding claims, **characterised in that** means for modifying the emerging fluid jet are provided on the outer surface (15) of the nozzle body (2) in the region of the at least one nozzle (12).

15. Nozzle device according to claim 14, **characterised in that** the means for modifying the fluid jet are formed by a surface extending away from the nozzle body (2) and adjacent to the at least one nozzle opening (12), which surface is for example part of a protrusion (16) and/or is profiled.

16. Nozzle device according to one of the preceding claims, **characterised by** being produced as a moulded part from metal or plastic.

17. Nozzle device according to one of the preceding claims, **characterised in that** the axis of the fluid connection (8) and the axis of the at least one nozzle opening with a fan characteristic lie in a common or approximately common plane.

## Revendications

1. Dispositif de tuyère permettant de délivrer un liquide, en particulier un liquide de nettoyage sur des vitres de véhicules et/ou des verres diffusants de phares, comportant au moins un embout (8) prévu au niveau d'un corps de tuyère (2), permettant de délivrer le liquide ainsi qu'au moins une ouverture de tuyère (12) sur le corps de tuyère (2), qui a une caractéristique de tuyère fendue et est reliée à l'embout de liquide (8) par l'intermédiaire d'un trajet de liquide configuré à l'intérieur du corps de tuyère (2), moyennant quoi, à l'intérieur du corps de tuyère (2), est formée au moins une chambre rotative (3) destinée au liquide, qui présente une surface interne (4) entourant un axe de rotation (M), moyennant quoi la chambre rotative (3) est configurée en étant incurvée de manière concave dans au moins une zone partielle de la surface interne (4) délimitant la chambre rotative autour d'au moins un axe de rotation (M), et l'embout de liquide (8) débouche de manière excentrique dans la chambre avec son embouchure (11) par rapport à l'axe de rotation (M), **caractérisé en ce que** l'embouchure (11) de l'embout de liquide (8) et la au moins une ouverture de tuyère (12) sont prévues au niveau de la surface interne (4) entourant l'axe de rotation (M) de la chambre rotative (3), et **en ce que** la au moins une ouverture de tuyère (12) est décalée d'un certain degré angulaire autour de l'axe de rotation (M) par rapport à l'embouchure de l'embout de liquide (8).

2. Dispositif de tuyère selon la revendication 1, **caractérisé en ce que** la chambre rotative (3) est configurée de manière concave au moins dans une zone partielle se trouvant entre l'embouchure (11) de l'embout de liquide (8) et la au moins une ouverture de tuyère (12), de sa surface interne (4).

3. Dispositif de tuyère selon la revendication 1, **caractérisé en ce que** la chambre rotative est configurée de manière concave au niveau de l'ensemble de sa surface interne (4) entourant l'axe de rotation (M).

4. Dispositif de tuyère selon l'une quelconque des revendications précédentes, **caractérisé en ce que** la chambre rotative (3) est configurée, au moins au niveau de la zone partielle concave de sa surface interne (4), conformément à la surface d'enveloppe d'un corps rotatif disposé sur le même axe que l'axe de rotation (M).

5. Dispositif de tuyère selon l'une quelconque des revendications précédentes, **caractérisé en ce que** la chambre rotative (3) est configurée en forme de cylindre circulaire au moins au niveau de la zone partielle concave de sa surface interne (4).

6. Dispositif de tuyère selon l'une quelconque des revendications précédentes, **caractérisé en ce que** l'embout de liquide (8) forme un canal (9) permettant de délivrer le liquide, lequel débouche de manière excentrique dans la chambre rotative (3) avec son axe (10) au niveau de l'embouchure (11).

7. Dispositif de tuyère selon l'une quelconque des revendications précédentes, **caractérisé en ce que** l'embout de liquide (8) forme un canal (9) permettant de délivrer le liquide, et **en ce que** le canal (9) débouche de manière quasiment tangentielle dans la chambre rotative (3) par rapport à une ligne circulaire fictive autour de l'axe de rotation (M).

8. Dispositif de tuyère selon l'une quelconque des revendications précédentes, **caractérisé en ce que** l'embout de liquide (8) forme un canal (9) permettant de délivrer le liquide, et **en ce que** l'axe (10) du canal (9) de l'embout de liquide (8) ou de l'embouchure (11) se trouve dans un plan perpendiculaire ou quasiment perpendiculaire à l'axe de rotation (M).

9. Dispositif de tuyère selon l'une quelconque des revendications précédentes, **caractérisé en ce que** l'embouchure (11) de l'embout de liquide (8) et la au moins une ouverture de tuyère (12) sont prévues de manière à être décalées l'une de l'autre d'un degré angulaire supérieur ou inférieur à 90°.

10. Dispositif de tuyère selon l'une quelconque des revendications précédentes, **caractérisé en ce que** l'ouverture de tuyère est formée par au moins une fente de tuyère (12) et/ou au moins un agencement de plusieurs ouvertures de tuyère.

11. Dispositif de tuyère selon la revendication 10, **caractérisé en ce que** la au moins une fente de tuyère (12) et/ou le au moins un agencement d'ouvertures de tuyère s'étendent sur une certaine plage angulaire autour de l'axe de rotation (M).

12. Dispositif de tuyère selon la revendication 10 ou 11, **caractérisé en ce que** la au moins une fente de tuyère (12) et/ou le au moins un agencement d'ouvertures de tuyère sont prévus dans un plan qui est perpendiculaire à l'axe de rotation (M) ou forme un certain angle avec celui-ci.

13. Dispositif de tuyère selon l'une quelconque des revendications 10 à 12, **caractérisé en ce que** la au moins une fente de tuyère (12) et/ou le au moins un agencement d'ouvertures de tuyère s'étendent le long d'une ligne hélicoïdale fictive autour de l'axe de rotation (M).

14. Dispositif de tuyère selon l'une quelconque des revendications précédentes, **caractérisé en ce que**, au niveau de la surface externe (15) du corps de tuyère (2), dans la zone d'au moins une tuyère (12), sont prévus des moyens permettant de modifier le jet de liquide sortant.

15. Dispositif de tuyère selon la revendication (14), **caractérisé en ce que** les moyens permettant de modifier le jet de liquide sont formés par une surface s'étendant à partir du corps de tuyère (2) et adjacente à au moins une ouverture de tuyère (12), et qui fait par exemple partie d'une saillie (16) et/ou est profilée.

16. Dispositif de tuyère selon l'une quelconque des revendications précédentes, **caractérisé en ce qu'**il est fabriqué sous la forme d'une pièce moulée constituée de métal ou de matière plastique.

17. Dispositif de tuyère selon l'une quelconque des revendications précédentes, **caractérisé en que** l'axe de l'embout de liquide (8) et l'axe de la au moins une ouverture de tuyère se trouvent dans un plan commun ou quasiment commun grâce à leurs caractéristiques d'éventail.
